(19) Europäisches Patentamt
European Patent Office
Office européen des brevets

(11) EP 1 512 805 B1

(12) # EUROPÄISCHE PATENTSCHRIFT

(45) Veröffentlichungstag und Bekanntmachung des Hinweises auf die Patenterteilung:
**28.06.2006 Patentblatt 2006/26**

(51) Int Cl.:
***E04C 5/03*** *(2006.01)*

(21) Anmeldenummer: **04028479.6**

(22) Anmeldetag: **18.02.2003**

(54) **Rohrförmiger gerippter Bewehrungsstahl, Verfahren zum Herstellen eines rohrförmigen gerippten Bewehrungsstahls und Verwendung eines rohrförmigen Bewehrungsstahls**

Tubular fluted reinforcing steel, method for producing a tubular fluted reinforcing steel and use of a tubular reinforcing steel

Acier d'armature cannelé tubulaire, procédé de fabrication d'un acier d'armature cannelé tubulaire et utilisation d'un acier d'armature tubulaire

(84) Benannte Vertragsstaaten:
**AT BE BG CH CY CZ DE DK EE ES FI FR GB GR HU IE IT LI LU MC NL PT SE SI SK TR**

(30) Priorität: **18.02.2002 DE 10206819**

(43) Veröffentlichungstag der Anmeldung:
**09.03.2005 Patentblatt 2005/10**

(62) Dokumentnummer(n) der früheren Anmeldung(en) nach Art. 76 EPÜ:
**03702653.1 / 1 476 613**

(73) Patentinhaber: **Aicher, Max**
**83395 Freilassing (DE)**

(72) Erfinder: **Aicher, Max**
**83395 Freilassing (DE)**

(74) Vertreter: **Kramer - Barske - Schmidtchen**
**European Patent Attorneys**
**Patenta**
**Radeckestrasse 43**
**81245 München (DE)**

(56) Entgegenhaltungen:
**EP-A- 0 059 070**
**EP-A- 1 231 331**
**WO-A-01/68287**
**DE-A- 4 134 178**
**DE-A- 10 013 581**

EP 1 512 805 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf eine Verwendung eines rohrförmigen gerippten Bewehrungsstahls, insbesondere eines durch Warmwalzen hergestellten, tiefgerippten rohrförmigen Bewehrungsstahl.

Ein im Stahlbeton einzusetzendes rohrförmiges Stahlteil mit einer ein Außengewinde bildenden Hochrippung ist aus der DE 100 13 581 A1 bekannt.

Solche gerippten Stahlröhren werden durch Kaltwalzen, z.B. ein sogenanntes Kaltpilgern, hergestellt.

Ein Verfahren zum Herstellen von nahtlosen Rohren ohne Rippung/Profilierung durch Warmwalzen ist im Stand der Technik bekannt.

Aufgabe der Erfindung ist es, eine verbesserte Verwendung eines rohrförmigen gerippten Bewehrungsstahls anzugeben.

Diese Aufgabe wird gelöst durch eine Verwendung nach Anspruch 1.

Eine Weiterbildung der Erfindung ist in dem Unteranspruch angegeben.

Weitere Merkmale und Zweckmäßigkeiten ergeben sich aus der Beschreibung von Ausführungsbeispielen anhand der Figuren. Von den Figuren zeigen:

Fig. 1 eine schematische Darstellung eines Stichs zum Warmwalzen eines rohrförmigen, tiefgerippten Bewehrungsstahls; und

Fig. 2 einen schematischen Querschnitt eines rohrförmigen, tiefgerippten Bewehrungsstahls nach einer Ausführungsform der Erfindung.

Ein Betonstahl mit Hochrippung wurde bisher als Bauteil für sogenannte Injektionsanker eingesetzt. Dabei wird die rohrförmige Ausbildung dazu genutzt, das durch den Injektionsanker zu injizierende Material, das heißt Frischbeton oder ein anderes aushärtendes Material, zu injizieren, und die Rippung diente zur Verankerung in (zur Herstellung des Verbunds mit) dem ausgehärteten Material (Beton oder ähnlichem).

Der Bewehrungsstahl nach den Ausführungsformen der Erfindung ist ein rohrförmiger und gerippter Bewehrungsstahl und kann ein Betonstahl oder ein Spannstahl sein.

Die vorteilhafte Verwendung der röhrenförmigen gerippten Bewehrungsstähle ist die Verwendung als Bewehrung eines Druckgliedes wie einer senkrechten Stütze, Säule etc. Die besonderen Vorteile dieser Verwendung ergeben sich dadurch, dass das Innere des rohrförmigen, gerippten Bewehrungsstahls mit Beton gefüllt ist, was in einer Erhöhung der zulässigen Belastung auf Grund der vollständigen Umschnürung des eingeschlossenen Betons resultiert.

Bisher wurden rohrförmige, gerippte Bewehrungsstähle durch Kaltwalzen (Kaltpilgem) hergestellt. Ein solches Herstellungsverfahren ist aufwendig und daher kostenintensiv.

Nachfolgend wir ein Verfahren zum Herstellen von rohrförmigen, gerippten Bewehrungsstählen durch Warmwalzen mit Tiefrippung angegeben. Bisher wurde es für nicht möglich gehalten, rohrförmige, gerippte Stähle ohne Gegenlager (Sehle) zu walzen.

Das Verfahren nutzt das Warmwalzen, zum Beispiel beim sogenannte Streckreduzierverfahren, in Verbindung mit der Ausbildung einer Tiefrippung. Dabei wird vorzugsweise eine hohe Anzahl von Stichen/Gerüsten, bevorzugt mehr als zwanzig (zum Beispiel sechsundzwanzig Stiche) verwendet. Bevorzugterweise werden drei im Winkel von 120° angeordnete Rollen verwendet. Versuche haben ergeben, dass es auch möglich ist, die Tiefrippung als umlaufende Rippung mit einer Steigung nach Art eines Gewindes zu versehen. Ein Stich (Gerüst), das in einem solchen Warmwalzverfahren verwendet wird, ist schematisch in Fig. 1 gezeigt. Die Rollen 1, 2, 3 sind im Winkel von 120° relativ zueinander angeordnet. In den Rollen wenigstens eines Teils der Stiche/Gerüste beginnend von dem letzten Stich/Gerüst ist eine Profilierung ausgebildet, die eine Tiefrippung ausbildet. Da die Rollen zwangsläufig keine ununterbrochen umlaufenden Rippen ausbilden können, ergeben sich eine Anzahl von Rippensegmenten, die der Anzahl der verwendeten Rollen entspricht. Zwischen den Rippensegmenten ausgebildete Nähte. In Fig. 1 sind die Profilierungen angedeutet.

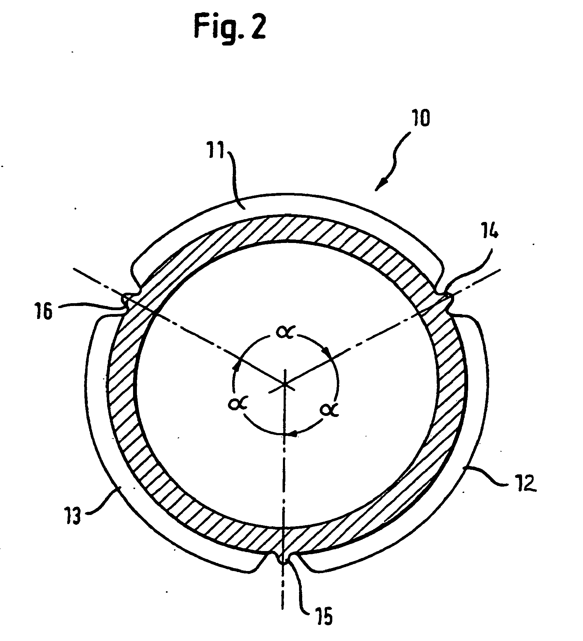

Ein Beispiel eines entsprechenden Rohres (Bewehrungsstahls) 10 ist in Fig. 2 schematisch im Querschnitt dargestellt. Zwischen den Rippensegmenten 11, 12, 13 sind entsprechende Nähte 14, 15, 16 ausgebildet.

Versuche haben ergeben, dass die Ausbildung der Segmente nach Art einer umlaufenden Rippe mit Gewindesteigung möglich ist. Zur Ausbildung eines gängigen Gewindes sind dann lediglich die Nähte zu entfernen.

Die Rohre (Bewehrungsstähle) werden mit Außendurchmessern von 20mm-150mm hergestellt. Die Bewehrungsstähle haben handelsübliche Qualitäten wie BST 500 für Betonstähle oder Rm <1600 N/mm$^2$ oder handelsübliche Qualitäten nach den nationalen Anforderungen.

Bei der Verwendung eines solchen rohrförmigen tiefgerippten Bewehrungsstahls zur Bewehrung von Stahlbeton kann die bezogenen Rippenfläche aufgrund der rohrförmigen Ausbildung reduziert werden. Die Reduzierung ergibt sich nach der folgenden Formel:

$$f_R' = f_R\left(1 - \frac{F_H}{F_G}\right).$$

wobei $f_R$ die bezogene Rippenfläche für einen Vollstab gleichen Durchmessers, $f_R$' die bezogenen Rippenfläche für den rohrförmigen, gerippten Bewehrungsstahl, $F_H$ die

Querschnittsfläche des Rohrinneren (also des hohlen Rohrinneren) und $F_G$ die Querschnittsfläche des Rohrs (also des hohlen Rohrinneren und des Rohrmantels) sind.

## Patentansprüche

1. Verwendung eines rohrförmigen, gerippten Bewehrungsstahls als Bewehrung eines Druckglieds, bei der das Innere des rohrförmigen, gerippten Bewehrungsstahls mit Beton gefüllt wird.

2. Verwendung nach Anspruch 1, bei der der rohrförmige, gerippte Bewehrungsstahl ein rohrförmiger, tiefgerippter Bewehrungsstahl ist, bei dem die Tiefrippung durch Warmwalzen ausgebildet ist, und die bezogenen Rippenfläche $f_R$' gemäß der Formel

$$f_R' = f_R\left(1 - \frac{F_H}{F_G}\right).$$

aus der notwendigen bezogenen Rippenfläche $f_R$ für einen Vollstab gleichen Durchmessers abgeleitet ist, wobei $F_H$ die Querschnittsfläche des Rohrinneren (also des hohlen Rohrinneren) und $F_G$ die Querschnittsfläche des Rohrs (also des hohlen Rohrinneren und des Rohrmantels) sind.

## Claims

1. Use of a tubular, ribbed reinforcing bar as reinforcement for a compression member, in which the interior of the tubular, ribbed reinforcing bar is filled with concrete.

2. Use according to Claim 1, in which the tubular, ribbed reinforcing bar is a tubular, deep-ribbed reinforcing bar in which the deep ribbing is formed by hot rolling, and the related rib area $f_{R'}$ is derived according to the formula

$$f_{R'} = f_R\left(1 - \frac{F_H}{F_G}\right)$$

from the necessary related rib area $f_R$ for a solid bar of the same diameter, where $F_H$ is the cross-sectional area of the interior of the tube (that is to say of the hollow interior of the tube) and $F_G$ is the cross-sectional area of the tube (that is to say of the hollow interior of the tube and of the tube shell).

## Revendications

1. Utilisation d'un acier d'armature tubulaire cranté en tant qu'armature pour un élément comprimé, consistant à remplir l'intérieur de l'acier d'armature tubulaire cranté avec du béton.

2. Utilisation selon la revendication 1, consistant à utiliser un acier d'armature cranté qui est un acier d'armature tubulaire cranté, sur lequel le crantage profond est crée par laminage à chaud et la surface spécifique est déduite selon la formule

$$f'_R = f_R\left(1 - \frac{F_H}{F_G}\right)$$

de la surface spécifique nécessaire des crans $f_R$ pour une barre plein de diamètre identique, $F_H$ étant la surface de section transversale de l'intérieur du tube (donc de l'intérieur creux du tube) et $F_G$ étant la surface de section transversale du tube (donc de l'intérieur creux du tube et de l'enveloppe du tube).

Fig. 1

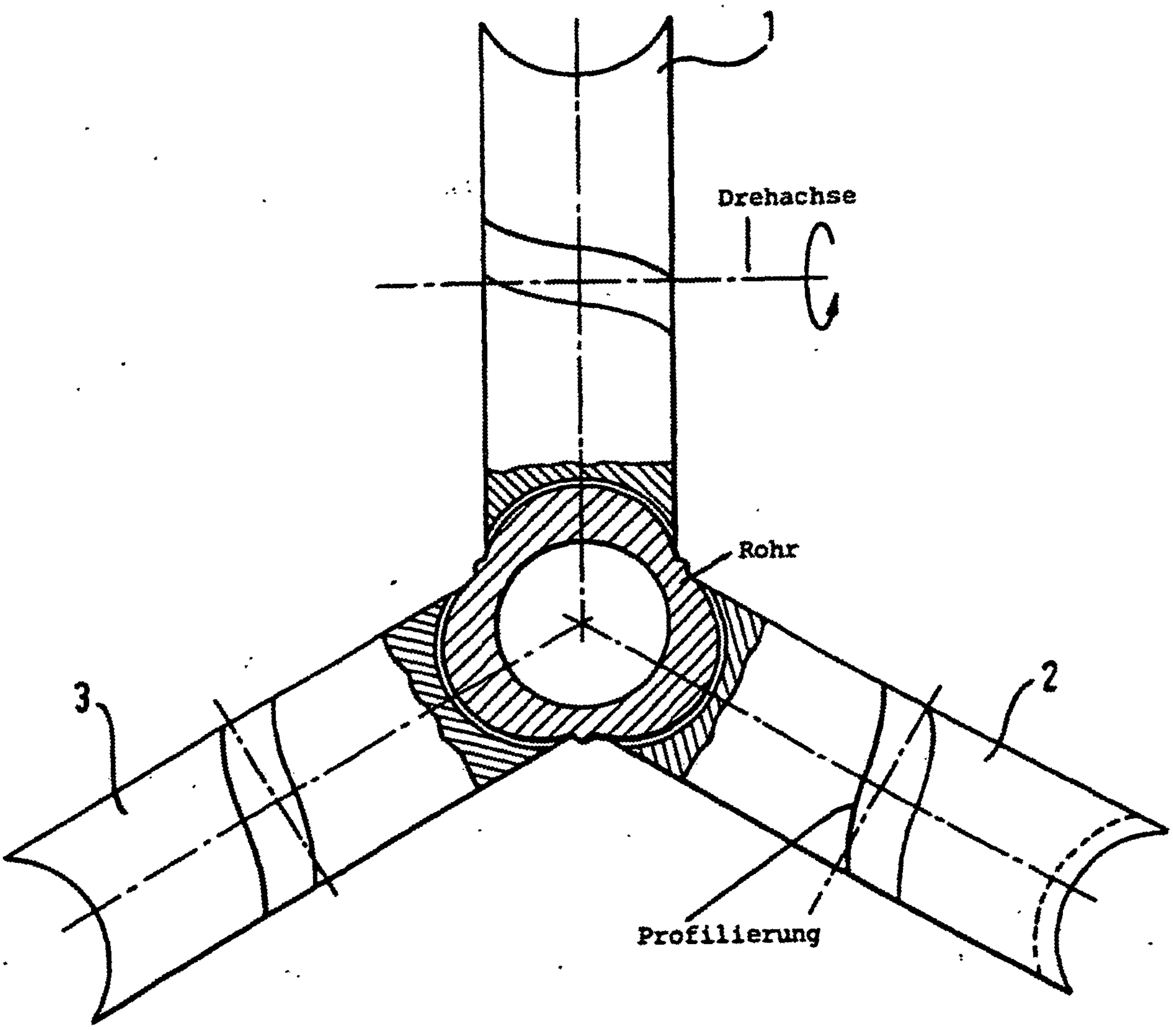

Fig. 2